Europäisches Patentamt

European Patent Office

Office européen des brevets

(19)

(11) Publication number: **0 013 175**
BT

# EUROPEAN PATENT SPECIFICATION

(45) Date of publication of patent specification: 22.06.83

(21) Application number: 79303049.5

(22) Date of filing: 24.12.79

(51) Int. Cl.³: **F 16 D 27/10,**
**F 16 C 35/06, B 60 H 3/04**

(54) Electromagnetic clutch.

<table>
<tr><td>

(30) Priority: 25.12.78 JP 162320/78
12.01.79 JP 2732/79

(43) Date of publication of application:
09.07.80 Bulletin 80/14

(45) Publication of the grant of the patent:
22.06.83 Bulletin 83/25

(84) Designated Contracting States:
DE FR GB IT SE

(56) References cited:
DE - A - 1 931 300
FR - A - 2 286 310
GB - A - 1 127 896
US - A - 3 044 594
US - A - 3 066 000
US - A - 3 752 279
US - A - 3 876 048
US - A - 4 122 930
US - A - 4 150 738

</td><td>

(73) Proprietor: SANKYO ELECTRIC COMPANY
LIMITED
20 Kotobuki-cho
Isesaki-shi, Gunma-ken (JP)

(72) Inventor: Hiraga, Masaharu
1757-13, Kamiuekihonmachi
Isesaki-shi Gumma-ken (JP)

(74) Representative: Pritchard, Colin Hubert et al,
Mathys & Squire 10 Fleet Street
London EC4Y 1AY (GB)

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Electromagnetic clutch

This invention relates to electromagnetic clutches, suitably to clutches for use in driving refrigerant compressors for automobile air conditioning systems.

U.S. Specification No. 3,876,048 discloses an electromagnetic clutch for driving a compressor in an automobile air conditioning system. The clutch includes a pulley which, when the clutch is energised, is rotated by a belt driven by the automobile engine. A bearing for supporting the pulley has an inner ring mounted on a tubular extension which forms part of a bearing support secured to the housing of the compressor. An outer ring of the bearing is secured to a sleeve upon which the pulley is mounted. Axial movement of the bearing is prevented by engaging the inner ring between a part of the bearing support and a snapring on the tubular extension.

British Specification No. 1,127,896 also discloses an electromagnetic clutch in which an inner ring of a bearing is supported by a tubular member secured to a housing or stationary magnet body. No means are provided for preventing axial or rotational movement between the inner ring and the tubular member.

In U.S. Specification No. 3,044,594 there is a further electromagnetic clutch for driving automobile compressors for air conditioning systems. Again, an inner ring of a bearing is mounted on a tubular extension of the compressor housing and an outer ring of the bearing is secured relative to a driving pulley. Axial movement of the bearing is prevented by engaging the inner ring between a shoulder and the tubular extension and a snapring. Sealing means are provided between a shaft driven by the pulley and the tubular extension.

It is desirable for the bearing supporting the pulley in a clutch having the form of construction described in the above specifications to be mounted so that it does not rotate relative to its support.

French Specification No. 2,286,310 discloses a roller bearing for a wheel. This bearing has an inner ring fitted on to a shaft with a spacer ring engaged between the inner ring and a shoulder on the shaft. Relative rotation between the inner ring of the bearing and the spacer ring is prevented by the engagement of teeth on the inner ring with teeth on the spacer ring. However, this does not prevent rotation of the inner ring relative to the shaft.

According to the present invention there is provided a device having a housing, a drive shaft extending out of, and rotatably mounted on, the housing, a cantilever bearing support attached to said housing, an electromagnetic clutch including a pulley member rotatably supported on said bearing support by first bearing means, an electromagnet fixedly supported on said bearing support and disposed within an annular cavity of said pulley member, and electromagnetic armature plate elastically connected to said drive shaft, and axial stopper means secured to said bearing support for preventing said bearing means from axial movement, characterised in that said bearing support includes a sleeve member coaxial with said drive shaft and a separate member having a flange portion secured to the front surface of said housing and a cylindrical portion whose inner surface is affixed to an outer surface of said sleeve member, said bearing means are disposed between an end surface of said cylindrical portion and said axial stopper means, and an end surface of said cylindrical portion opposed to said flange portion and an end surface of an inner ring of said bearing means are provided with interlocking means to prevent rotation of said inner ring of said bearing means relative to said bearing support element.

Suitably, an axial end portion of said sleeve member is fitted into an aperture in said housing, and a second bearing means is disposed within said axial end portion of said sleeve member to rotatably support said drive shaft. Sealing means may be disposed between an outer surface of said sleeve member and an inner wall of said aperture.

Further sealing means may be disposed between contacting surfaces of said housing and an axial end surface of said flange portion.

A device according to the invention may further comprise a shaft seal assembly assembled on said drive shaft within said sleeve member.

The interlocking means may comprise at least one pair of axial projections formed on the end surface of said cylindrical portion and the end surface of said inner ring of said bearing means.

Alternatively, the interlocking means may comprise a plurality of projections formed on one of the end surface of said cylindrical portion or the opposing axial end surface of said the inner ring of said bearing means, and at least one mating depression formed on the other.

The housing may be made of aluminium alloy, and said sleeve member may be made of steel.

The invention will now be described, by way of example, with reference to the accompanying drawings, in which:—

Fig. 1 is a sectional view of an electromagnetic clutch according to the invention;

Fig. 2 is a perspective view of several disassembled parts of the clutch shown in Fig. 1;

Fig. 3 is a perspective view, similar to Fig. 2, of a modified embodiment of the invention;

Fig. 4 is a perspective view of another modified embodiment; and

Fig. 5 is a sectional view of another embodiment of this invention.

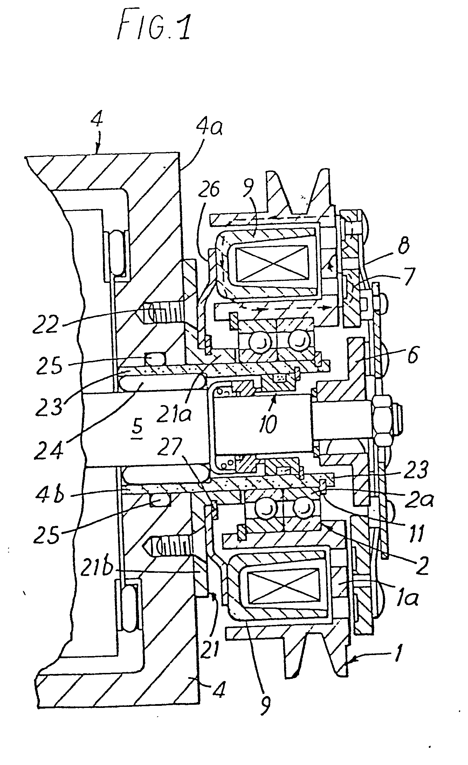

Fig. 1 illustrates an electromagnetic clutch according to the invention which is used between an engine and a compressor for selectively driving the compressor. The clutch includes a pulley 1 which is rotatably mounted on a bearing 2 mounted on a compressor housing 4 (as hereinafter described) and which is rotated by a belt (not shown) from the automobile engine (not shown). Pulley 1 is provided with a plurality of concentric annular magnetic pole faces 1a at an axial end thereof. A drive shaft 5 of the compressor extends out of the housing 4. A hub 6 is fixed to the extending terminal end of drive shaft 5, and an annular armature plate 7 is joined by leaf springs 8 to hub 6 so that armature plate 7 faces the annular concentric pole faces with an axial space therebetween. An electromagnet 9 is stationarily disposed within an annular hollow portion formed in pulley 1 to supply magnetic flux for attracting armature plate 7 to magnetic pole faces 1a.

Thus, when electromagnet 9 is energized, drive shaft 5 is rotated together with pulley 1 by the engine output, and when electromagnet 9 is not energized, pulley 1 is rotated by the engine but the compressor is not driven.

Briefly stated, in preferred embodiments of this invention, a reduction in diameter of the pulley is obtained by supporting a rigid tubular member of thin wall thickness on a radial flange member secured to the housing of the device, an inner ring of a bearing for supporting the pulley being locked with a shoulder or an axial end of the radial flange member to prevent the inner ring from rotating on the tubular member.

Referring again to Fig. 1, a flange member 21 is secured onto the aluminium or aluminium alloy housing 4 of the device or compressor by screws 22 with a tubular member 23 fixedly supported by flange member 21.

Flange member 21 comprises a short cylindrical portion 21a and a radial flange portion 21b connected to an axial end of cylindrical portion 21a. Radial flange portion 21b is contacted on the front surface 4a of compressor housing 4 and secured by screws 22. Tubular member 23 is fitted into an aperture 4b of housing 4 at an end, and supports a radial needle bearing 24 therein. Tubular member 23 is also fitted into cylindrical portion 21b and secured thereto by, for example, welding. Thus, tubular member 23 is strongly supported by compressor housing 4 and flange member 21.

Drive shaft 5 is rotatably supported by radial needle bearing 24 and extends in tubular member 23 to project beyond the axial end of tubular member 23.

Shaft seal assembly 10 is disposed on drive shaft 5 within tubular member 23. A sealing element 25 is disposed between the inner wall of aperture 4b and the outer surface of tubular member 23.

On tubular member 23, bearing 2 is mounted and pulley 1 is mounted on bearing 2. Electromagnet 9 associating with pulley 1 is fixedly supported by a bracket 26 secured to flange member 21 by retainer ring 27.

Armature plate 7 is mounted on the extended end of drive shaft 5 as described above.

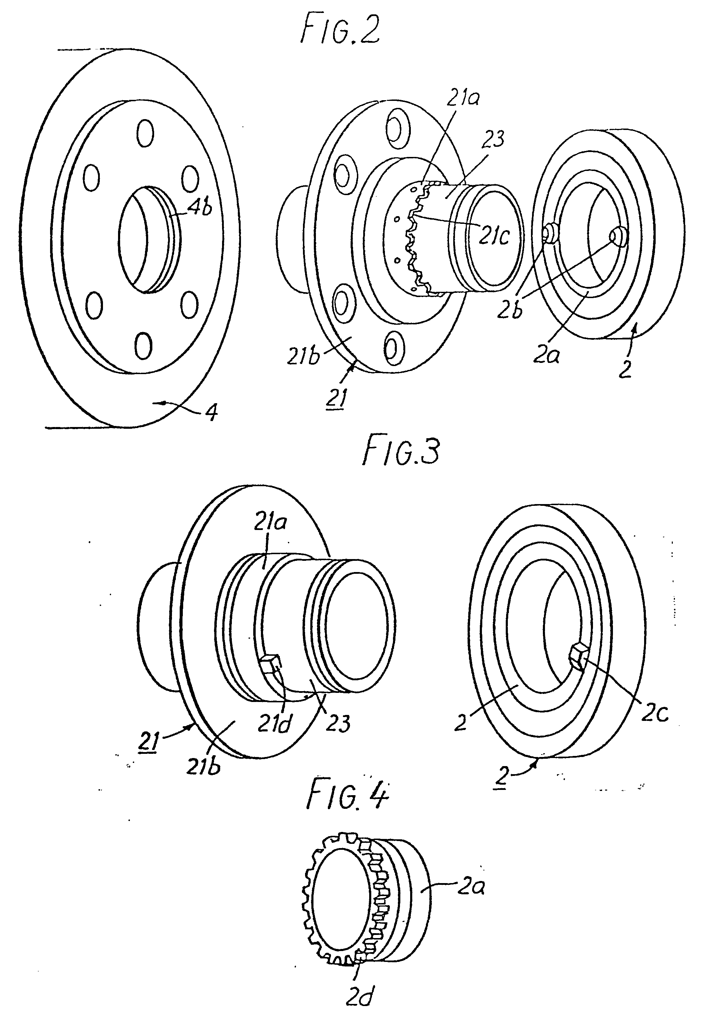

Referring to Fig. 2 in addition to Fig. 1, cylindrical portion 21a is formed with a plurality of depressions 21a in its axial end surface. While the inner ring 2a of bearing 2 is provided with axial projections 2b on the axial end surface opposing the axial end of cylindrical portion 21a.

Therefore, when inner ring 2a is held between the axial end surface of cylindrical portion 21a and a retainer ring or snap ring 11, axial projections 2b engage with axial depressions 21c to securely prevent inner ring 2a from rotating.

According to the embodiment, since tubular member 23 is not formed integral with compressor housing 4, a tube of rigid material such as steel can be used. Furthermore, since tubular member 23 is supported by compressor housing 4 and flange member 21, it is strong in the mechanical strength enough to resist the tension of belt means wound on pulley 1 even if the wall thickness of tubular member 23 is made thin. Therefore, the diameter of pulley 1 is reduced.

Furthermore, the rotation of inner ring 2a of bearing 2 is prevented by a simple construction, or the engagement of axial projections 2b formed on the axial end surface of the inner ring with axial depressions 21c formed in the axial end surface of cylindrical portion 21a of flange member 21.

Therefore, the assembling operation is simplified because closely fitting operation is not required.

Fig. 3 shows a modification in which cylindrical portion 21a is provided with an axial projection 21d on the axial end surface. While, the inner ring 2a of bearing 2 is provided with an axial projection 2c. After bearing 2 is mounted on tubular member 23, with axial projections engaging with one another to prevent inner ring 2a from rotating.

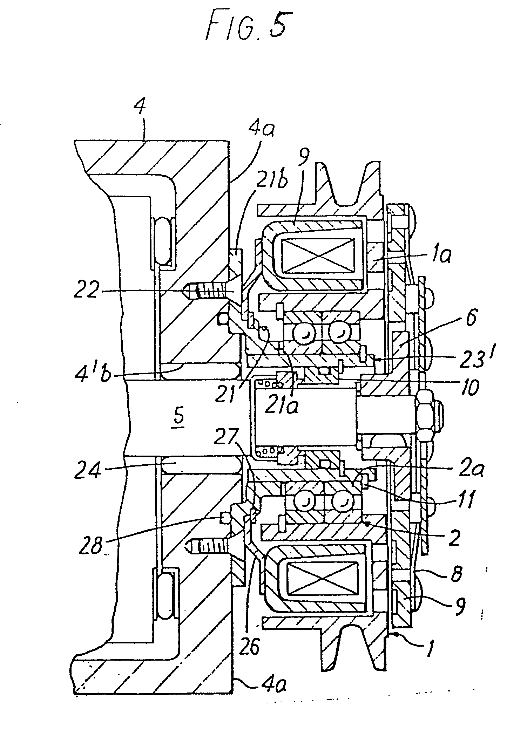

Referring to Fig. 4, in a modification shown therein, inner ring 2a is provided with a plurality of radial projections 2d like a gear, which engage with depressions 21c of cylindrical portion 21 as shown in Fig. 5.

Fig. 5 shows another embodiment which is similar to the previous embodiment except that tubular member 23' is short and is not fitted into aperture 4b' of housing. In this arrangement, the assembling operation is more easy in comparison with the previous embodiment. A sealing element 28 is disposed between front surface 4a of housing 4 and flange portion 21b.

It will be easily understood that this invention may be applied on not only compressor but also the other devices having a drive shaft.

This invention has been described in detail in connection with preferred embodiments, but these are merely for example only and the invention is not restricted thereto.

## Claims

1. A device having a housing (4), a drive shaft (5) extending out of, and rotatably mounted on, the housing, a cantilever bearing support attached to said housing (4), an electromagnetic clutch including a pulley member (1) rotatably supported on said bearing support by first bearing means (2), an electromagnet (9) fixedly supported on said bearing support and disposed within an annular cavity of said pulley member (1), an electromagnetic armature plate (7) elastically connected to said drive shaft (5), and axial stopper means (11) secured to said bearing support for preventing said bearing means (2) from axial movement, characterised in that said bearing support includes a sleeve member (23) coaxial with said drive shaft (5) and a separate member having a flange portion (21b) secured to the front surface of said housing (4) and a cylindrical portion (21a) whose inner surface is affixed to an outer surface of said sleeve member (23), said bearing means (2) are disposed between an end surface of said cylindrical portion (21a) and said axial stopper means (11), and an end surface of said cylindrical portion (21a) opposed to said flange portion (21b) and an end surface of an inner ring (2a) of said bearing means (2) are provided with interlocking means (21c—2b, 21d—2d) to prevent rotation of said inner ring (2a) of said bearing means (2) relative to said bearing support element (23).

2. A device as claimed in claim 1, wherein an axial end portion of said sleeve member (23) is fitted into an aperture (4b) in said housing (4), and a second bearing means (24) is disposed within said axial end portion of said sleeve member (23) to rotatably support said drive shaft (5).

3. A device as claimed in claim 2, which further comprises sealing means (25) disposed between an outer surface of said sleeve member (23) and an inner wall of said aperture (4b).

4. A device as claimed in claim 1, which further comprises sealing means (28) disposed between contacting surfaces of said housing (4) and an axial end surface of said flange portion (21b).

5. A device as claimed in claims 2 or 4, which further comprises a shaft seal assembly (10) assembled on said drive shaft (5) within said sleeve member (23).

6. A device as claimed in claim 1, wherein said interlocking means (21c—2b, 21d—2d) comprises at least one pair of axial projections (21c—2b, 21d—2d) formed on the end surface of said cylindrical portion (21a) and the end surface of said inner ring (2a) of said bearing means (2).

7. A device as claimed in claim 1, wherein said interlocking means (21a—2b, 21d—2c) comprises a plurality of projections (21d) formed on one of the end surface of said cylindrical portion (21a) or the opposing axial end surface of said the inner ring (2a) of said bearing means, and at least one mating depression (2d) formed on the other.

8. A device as claimed in claim 1, wherein said housing (4) is made of aluminium alloy, and said sleeve member (23) is made of steel.

## Patentansprüche

1. Antriebsvorrichtung bestehend aus einem Gehäuse (4), einer im Gehäuse drehbar gelagerten und aus ihm herausragenden Antriebswelle (5), einem vorragend am Gehäuse (4) befestigten Lagersupport, einer elektromagnetischen Kupplung mit einer Riemenscheibe (1), welche mit einem ersten Lager (2) auf dem Lagersupport gelagert ist, einem fest mit dem Lagersupport verbundenen und in einen ringförmigen Hohlraum der Riemenscheibe hineinragenden Elektromagneten (9), einer elastisch mit der Antriebswelle (5) verbundenen elektromagnetischen Ankerplatte (7) und einem axialen Widerlager (11) am Lagersupport zur axialen Sicherung des Lagers (2), dadurch gekennzeichnet, daß der Lagersupport aus einer koaxial zur Antriebswelle (5) ausgerichteten Hülse (23) und einem gesonderten Halter besteht, der mit einem Flanschteil (21b) an der Stirnfläche des Gehäuses (4) und mit einem zylindrischen Teil (21a) außen auf der Hülse (23) befestigt ist, daß das Lager (2) zwischen einer Stirnfläche des zylindrischen Teiles (21a) und dem axialen Widerlager (11) angeordnet ist und daß eine vom Flanschteil (21b) abgelegene Stirnfläche des zylindrischen Teiles (21a) und eine Stirnfläche vom Innenring (2a) des Lagers (2) mit formschlüssig ineinandergreifenden Ansätzen (21c—2b, 21d—2d) versehen sind, die eine Relativdrehung zwischen Lagerinnenring (2a) und Lagersupport (23) verhindern.

2. Vorrichtung nach Anspruch 1, dadurch gekennzeichnet, daß die Hülse (23) mit einem axialen Ende in eine Öffnung (4b) des Gehäuses (4) eingesetzt ist und innerhalb dieses axialen Endabschnittes mit einem zweiten Lager (24) versehen ist, in dem die Antriebswelle (5) drehbar gelagert ist.

3. Vorrichtung nach Anspruch 2, dadurch gekennzeichnet, daß zwischen Außenwand der Hülse (23) und der Innenwand der Gehäuseöffnung (4b) eine Dichtung (25) angeordnet ist.

4. Vorrichtung nach Anspruch 1, dadurch gekennzeichnet, daß zwischen den aufeinanderliegenden Flächen von Gehäuse (4) und axialer Stirnfläche des Flanschteiles (21b) eine Dichtung (28) angeordnet ist.

5. Vorrichtung nach Anspruch 2 oder 4, dadurch gekennzeichnet, daß auf der Antriebswelle (5) innerhalb der Hülse (23) eine Wellendichtung (10) angeordnet ist.

6. Vorrichting nach Anspruch 1, dadurch gekennzeichnet, daß die miteinander verrastbaren Ansätze mindestens aus zwei axialen Vorsprüngen (21c—2b, 21d—2d) bestehen, die an der Stirnfläche des zylindrischen Teiles (21a) und an der Stirnfläche des Lagerinnenringes (2a) vorgesehen sind.

7. Vorrichtung nach Anspruch 1, dadurch gekennzeichnet, daß die miteinander verrastbaren Ansätze (21a—2b, 21d—2c) aus einer Mehrzahl von Vorsprüngen (21d) bestehen, die an einer der Stirnflächen des zylindrischen Teiles (21a) oder an der gegenüberliegenden Stirnfläche des Lagerinnenringes (2a) angeordnet sind, und daß im anderen Bauteil mindestens eine paßgerechte Ausnehmung (2d) vorgesehen ist.

8. Vorrichtung nach Anspruch 1, dadurch gekennzeichnet, daß das Gehäuse aus einer Aluminiumlegierung und die Hülse (23) aus Stahl besteht.

## Revendications

1. Dispositif comportant un carter (4), un arbre d'entraînement (5) s'étendant hors du carter et monté rotatif sur le carter, un support de roulement en porte-à-faux fixé sur ledit carter (4), un embrayage électromagnétique comprenant une poulie (1) supportée en rotation sur ledit support de roulement par des premiers moyens à roulement (2), un électroaimant (9) supporté de façon fixe par ledit support de roulement et disposé à l'intérieur d'une cavité annulaire ménagée dans ladite poulie (1), une plaque d'induit électromagnétique (7) reliée de façon élastique audit arbre d'entraînement (5), et des moyens de butée axiale (11) fixés audit support de roulement pour empêcher lesdits moyens à roulement (2) de se déplacer axialement, caractérisé par le fait que ledit support de roulement comprend un manchon (23) coaxial avec ledit arbre d'entraînement (5) et un organe séparé comportant une partie en collerette (21b) fixée à la surface antérieure dudit carter (4) et une partie cylindrique (21a) dont la surface intérieure est fixée sur une surface extérieure dudit manchon (23), lesdits moyens à roulement (2) sont disposés entre une surface d'extrémité de ladite partie cylindrique (21a) et lesdits moyens de butée axiale (11), et une surface d'extrémité de ladite partie cylindrique

(21a) faisant face à ladite partie en collerette (21b) et une surface d'extrémité d'une bague intérieure (2a) desdits moyens à roulement (2) sont munies de moyens de verrouillage mutuel (21c—2b, 21d—2d) afin d'empêcher la rotation de ladite bague intérieure (2a) desdits moyens à roulement (2) par rapport audit support de roulement (23).

2. Dispositif selon la revendication 1, dans lequel une partie d'extrémité axiale dudit manchon (23) est logée dans une ouverture (4b) prévue dans ledit carter (4), et des seconds moyens à roulement (24) sont disposés à l'intérieur de ladite partie d'extrémité axiale dudit manchon (23), afin de supporter ledit arbre d'entraînement (5) en rotation.

3. Dispositif selon la revendication 2, lequel comprend en outre des moyens d'étanchéité (25) disposés entre une surface extérieure dudit manchon (23) et une paroi intérieure de ladite ouverture (4b).

4. Dispositif selon la revendication 1, lequel comprend en outre des moyens d'étanchéité (28) disposés entre les surfaces de contact dudit carter (4) et une surface d'extrémité axiale de ladite partie en collerette (21b).

5. Dispositif selon la revendication 2 ou 4, lequel comprend en outre un assemblage d'étanchéité d'arbre (10) assemblé sur ledit arbre d'entraînement (5) à l'intérieur dudit manchon (23).

6. Dispositif selon la revendication 1, dans lequel lesdits moyens de verrouillage mutuel (21c—2b, 21d—2d) comprennent au moins deux saillies axiales (21c—2b, 21d—2d) ménagées sur la surface d'extrémité de ladite partie cylindrique (21a) et sur la surface d'extrémité de ladite bague intérieure (2a) desdits moyens à roulement (2).

7. Dispositif selon la revendication 1, dans lequel lesdits moyens de verrouillage mutuel (21c—2b, 21d—2d) comprennent une pluralité de saillies (21d) ménagées soit sur la surface d'extrémité de ladite partie cylindrique (21a), soit sur la surface d'extrémité axiale qui lui fait face de ladite bague intérieure (2a) desdits moyens à roulement, et au moins un renfoncement de prise (2d) ménagé sur l'autre surface.

8. Dispositif selon la revendication 1, dans lequel ledit carter (4) est réalisé en un alliage d'aluminium, et ledit manchon (23) est réalisé en acier.

FIG.1

0 013 175

FIG.2

FIG.3

FIG.4

2

FIG. 5